# DEMANDE DE BREVET EUROPEEN

(11) **EP 2 846 482 A1**
(43) Date de publication de la demande: **11.03.2015**
(21) Numéro de dépôt: 14183828.4
(22) Date de dépôt: 05.09.2014
(51) Int. Cl.: H04B 10/11, B60R 11/02, H04B 10/114

(54) **Dispositif de communication destiné à équiper un habitacle de véhicule automobile**

(30) Priorité: 09.09.2013 FR 1358622
(71) Demandeur: VALEO VISION, 93012 Bobigny Cedex (FR)
(72) Inventeur: Letoumelin, Rémi, 77700 Chessy (FR); Cazenave, Philippe, 59650 Villeneuve D'Ascq (FR); Tassy, Pierre-Louis, 92600 Asnieres Sur Seine (FR); Rjeb, Slim, 92000 Nanterre (FR)

(57) **Abrégé**

L'invention concerne un véhicule automobile dans lequel on applique à l'intérieur de ce véhicule, la technologie de communication sans fil basée sur l'utilisation de la lumière comme vecteur d'informations, pour un échange de données entre un dispositif de transmission et/ou d'acquisition de données embarqué sur le véhicule et un équipement multimédia d'un occupant du véhicule.

L'invention concerne plus particulièrement un dispositif comportant à cet effet au moins des premiers moyens de transmissions de données comportant des premiers moyens de commande (14) adaptés à traduire une donnée numérique en un premier signal optique (22) modulé à haute fréquence et des premiers moyens d'émission (16, 18) dudit premier signal optique. Les premiers moyens d'émission sont agencés de manière à émettre ledit premier signal dans une première direction privilégiée d'émission prédéterminée.

## Description

La présente invention a trait au domaine des communications multimédias dans un véhicule automobile.

De nos jours, les constructeurs automobiles visent à mettre à disposition des passagers de leurs véhicules une connexion pour le transfert de données numériques, afin qu'ils puissent profiter de leurs appareils multimédias comme des téléphones ou des tablettes. On connait des véhicules équipés d'une interface bluetooth, sur laquelle les périphériques peuvent se connecter. Ce type de connexion présente l'inconvénient principal de ne pas pouvoir offrir à l'utilisateur une connexion à très haut débit.

On peut envisager également une connexion de type Wi-fi. Ce protocole de communication présente différents inconvénients, connus par ailleurs dans leurs applications hors automobile, mais qui sont ici amplifiés par l'application dans un espace confiné comme peut l'être une voiture. Ces inconvénients sont notamment les infractions possibles à la sécurité des données échangées, ou encore les risques que présentent les ondes radio pour la santé des passagers.

Par ailleurs, ces dernières années ont vu apparaître le développement d'une nouvelle technique de communication de données, basée sur le codage et le décodage de ces données numériques par modulation d'un signal lumineux. Cette technique, connue sous le nom de LI-FI, acronyme signifiant Light-Fidelity, ou de VLC, acronyme signifiant Visible Light Communication, fait notamment l'objet de la demande de brevet FR2953623, dans laquelle on divulgue un dispositif de communication entre deux véhicules par l'intermédiaire de leurs phares respectifs et de dispositifs émetteur-récepteur associés. Une information, par exemple de localisation, peut ainsi être envoyée par un premier véhicule au véhicule le suivant ou le croisant. Pour cela, le premier véhicule code l'information en une modulation de l'amplitude du faisceau lumineux émis par au moins un feu arrière. Le second véhicule comporte un photodétecteur adapté à capter le signal lumineux modulé émis par le premier véhicule, et un ensemble de commande associé décode ces modulations en des données numériques exploitables, notamment pour déterminer la distance entre les véhicules, et exploiter cette information pour calculer la distance de freinage.

La présente invention se place dans ce contexte d'une application du Li-Fi à un véhicule automobile.

Le véhicule automobile selon l'invention, auquel est appliquée la technologie de communication sans fil basée sur l'utilisation de la lumière comme vecteur d'informations, est caractérisé en ce que cette communication sans fil est appliquée à l'intérieur du véhicule pour la communication de données sécurisées internes au véhicule. L'utilisateur est adapté à recevoir, via un équipement multimédia, un signal optique porteur d'informations codées par modulation de l'intensité d'émission de rayons lumineux issus d'une source lumineuse.

L'invention vise à proposer un dispositif de communication destiné à équiper l'habitacle d'un véhicule automobile pour la transmission de données, selon cette technologie de communications, vers au moins un équipement multimédia disposé dans cet habitacle. Ce dispositif comporte au moins des premiers moyens de transmissions de données comportant des premiers moyens de commande adaptés à traduire une donnée numérique en un premier signal optique modulé à haute fréquence. On entend notamment par « signal optique » un signal lumineux dont la longueur d'onde est ici comprise dans le domaine visible et/ou infrarouge.

Le dispositif comporte en outre des premiers moyens d'émission dudit premier signal optique qui sont pilotés par lesdits moyens de commande. Les premiers moyens d'émission sont agencés de manière à émettre ledit premier signal dans une première direction privilégiée d'émission prédéterminée.

Avantageusement, ces premiers moyens d'émission comportent une source lumineuse qui est disposée en regard d'un élément optique de collimation. Ainsi, on peut proposer un système directif dans lequel le transfert d'information est d'autant mieux protégé que le réseau n'est pas ambiant mais ciblé.

Cet élément optique de collimation comporte d'une part une face d'entrée tournée vers la source lumineuse de manière à ce que les rayons lumineux émis par ladite source pénètrent par réfraction dans ledit élément optique, et d'autre part une face de sortie tournée vers l'habitacle du véhicule de manière à ce que les rayons lumineux guidés à l'intérieur de l'élément optique sortent de celui-ci par réfraction pour être dirigés dans l'habitacle selon la première direction privilégiée d'émission prédéterminée.

L'élément optique de collimation pourra comporter un réflecteur agencé pour réfléchir les rayons lumineux émis par la source lumineuse vers l'habitacle du véhicule selon cette première direction.

En outre, la face de sortie peut présenter une surface irrégulière, par exemple striée ou bossée, pour l'éclatement des rayons lumineux en sortie de l'élément optique de collimation. Ainsi, on peut proposer un faisceau d'information ciblé, mais éclaté. La sécurité de l'information transmise entre le dispositif et l'équipement multimédia reste entière car le faisceau de rayons porteurs de cette information reste ciblé dans une zone propre à un occupant du véhicule, mais en éclatant le faisceau, on diminue avantageusement le risque de coupure du transfert d'information que pourrait présenter un obstacle partiel entre le pavillon et l'équipement multimédia.

Dans un mode de réalisation préféré de l'invention, la source lumineuse est une diode électroluminescente et plus particulièrement une diode d'émission dans le proche infrarouge.

Cela permet d'une part de laisser les diodes allumées constamment, car le faisceau n'est pas visible, et d'autre part d'obtenir un transfert d'informations de qualité constante, de nuit comme de jour.

De plus, le dispositif ne génère pas d'ondes électromagnétiques, potentiellement nocives pour les occupants du véhicule, et il n'est pas créé d'interférence avec les équipements radios du véhicule. On comprendra que ces avantages sont également obtenus dans le cas d'une réalisation possible de la source lumineuse avec une diode d'émission dans le domaine visible.

Selon des caractéristiques de l'invention, le dispositif comporte en outre des moyens d'acquisition d'un signal optique formé par un rayon lumineux modulé à haute fréquence ainsi que des moyens de commande adaptés à traduire un signal optique modulé à haute fréquence en une donnée numérique, de manière à notamment permettre un échange de données par modulation de lumière en aller et retour par rapport à l'équipement multimédia, dans une communication sans fil basée sur l'utilisation de la lumière comme vecteur d'informations.

Dans ce cas, il est intéressant que les moyens de commande soient communs aux moyens d'acquisition et aux moyens d'émission de signal optique. Et avantageusement, les moyens d'acquisition sont disposés à proximité des moyens d'émission dudit dispositif.

Dans ce contexte d'une communication sans fil utilisant de la lumière comme vecteur d'informations, les premiers moyens de transmission sont agencés, selon une caractéristique de l'invention, de manière à associer le premier signal optique à un seul équipement multimédia et à établir avec cet équipement multimédia une communication sans fil pour un usage interne et sécurisé pour l'utilisateur occupant ledit véhicule et utilisant cet équipement multimédia. Ce premier signal optique comporte un faisceau d'informations codées par modulation de l'intensité lumineuse des rayons lumineux émis par les premiers moyens de transmission de données.

En variante, on pourra prévoir que les informations soient transportées par une onde porteuse, qui est elle-même modulée en intensité en phase ou en fréquence pour coder les informations du faisceau d'informations.

Dans un mode de réalisation particulier de l'invention, on prévoit avantageusement des deuxièmes moyens de transmissions de données comportant des deuxièmes moyens de commande adaptés à traduire une donnée numérique en un deuxième signal optique modulé à haute fréquence et des deuxièmes moyens d'émission dudit deuxième signal optique, les deuxièmes moyens d'émission étant agencés de manière à émettre ledit deuxième signal dans une deuxième direction privilégiée d'émission prédéterminée distincte de la première direction.

Ces deuxièmes moyens de transmission, qui comportent un élément de collimation semblable à celui des premiers moyens de transmission, sont agencés de manière à associer le deuxième signal optique à un autre équipement multimédia que celui associé aux premiers moyens de transmission et à établir avec cet équipement multimédia une communication sans fil pour un usage interne et sécurisé pour l'utilisateur occupant ledit véhicule et utilisant cet équipement multimédia.

On comprend qu'avantageusement, les premiers et deuxièmes moyens de commande sont formés par des mêmes moyens de commande communs aux premiers et deuxièmes moyens de transmissions, et éventuellement aux moyens d'acquisition si le dispositif en comporte.

Avantageusement, on prévoit un agencement des premiers et deuxièmes moyens de d'émission, et notamment une orientation spécifique de chacun des éléments optiques de collimation, pour qu'un premier signal optique soit dirigé vers les passagers arrières et qu'un deuxième signal optique soit dirigé vers le passager avant et/ou le conducteur.

Ainsi, chacun dans l'habitacle peut bénéficier d'un faisceau d'information qui lui est propre. Les données échangées sont sécurisées, et la connexion n'est pas entravée par des obstacles de l'habitacle comme les sièges puisque l'échange de données se fait verticalement entre l'équipement multimédia et le pavillon.

Selon une autre caractéristique du véhicule, le dispositif comporte des sources lumineuses secondaires, classiquement connues sous le nom de " liseuses ", formées par une diode émettrice de lumière blanche, ces diodes venant en complément des sources lumineuses formées par une diode émettrice de lumière proche infrarouge que comportent les premiers moyens d'émission du dispositif. On peut prévoir une série de sources lumineuses secondaires, et on peut alors substituer pour certaines de ces sources la diode émettrice de lumière blanche par une diode émettrice de lumière proche infrarouge pour former un dispositif de transmission de données tel que décrit précédemment au milieu des liseuses. On pourra également, dans un mode d'application différent, prévoir un format unique de sources lumineuses, que l'on équipe de diode électroluminescente à deux puces parmi lesquelles une puce adaptée à créer l'émission par la diode d'une lumière blanche et une puce adaptée à créer l'émission par la diode d'une lumière proche infrarouge. Ce type de diode est classiquement appelée bipuce, les deux puces étant regroupées dans une même capsule. Les moyens de commande associés sont aptes à commander, notamment alternativement, l'actionnement de l'une ou l'autre des puces en fonction d'une requête préalable de l'utilisateur, selon qu'il souhaite lire et/ou échanger des données multimédias.

Le dispositif pourra avantageusement être agencé en pavillon pour le toit de l'habitacle d'un véhicule automobile. Cet agencement est particulièrement avantageux en ce qu'il permet facilement l'accessibilité de chacune des places du véhicule par les premier et deuxième signaux optiques émis par le dispositif.

Dans le cadre de cette application du Li-Fi à un véhicule automobile, l'invention concerne également un équipement multimédia capable de recevoir des données dans un véhicule automobile. Cet équipement comporte des moyens spécifiques d'une part à la réception d'ondes optiques émises par un dispositif de communication tel que décrit précédemment, embarqué sur le véhicule automobile, et d'autre part à la détection des variations d'intensité desdites ondes. L'équipement multimédia comporte en outre un module de traitement du signal adapté à recevoir les données de la part desdits moyens spécifiques à la réception pour transformer ces données en un signal numérique exploitable par l'équipement multimédia.

Selon différentes caractéristiques de cet équipement multimédia selon l'invention, ces moyens spécifiques à la réception d'ondes optiques consistent en une photodiode apte à détecter un rayonnement de la source lumineuse et à le transformer en signal électrique.

Avantageusement, l'équipement comporte en outre une source lumineuse adaptée à émettre en direction dudit équipement embarqué du véhicule un faisceau de rayons lumineux dont l'intensité est modulée. Cette source lumineuse peut être une diode électroluminescente d'émission dans le proche infrarouge.

Ainsi, on peut avoir une communication dans les deux sens si le dispositif comporte des moyens d'acquisition de données tel que décrit précédemment.

L'invention a également pour objet un véhicule automobile comportant un dispositif de communication selon l'invention.

D'autres caractéristiques et avantages de l'invention apparaîtront à la lecture de la description détaillée d'un mode de réalisation qui va suivre et pour la compréhension de laquelle on se reportera aux dessins annexés parmi lesquels :

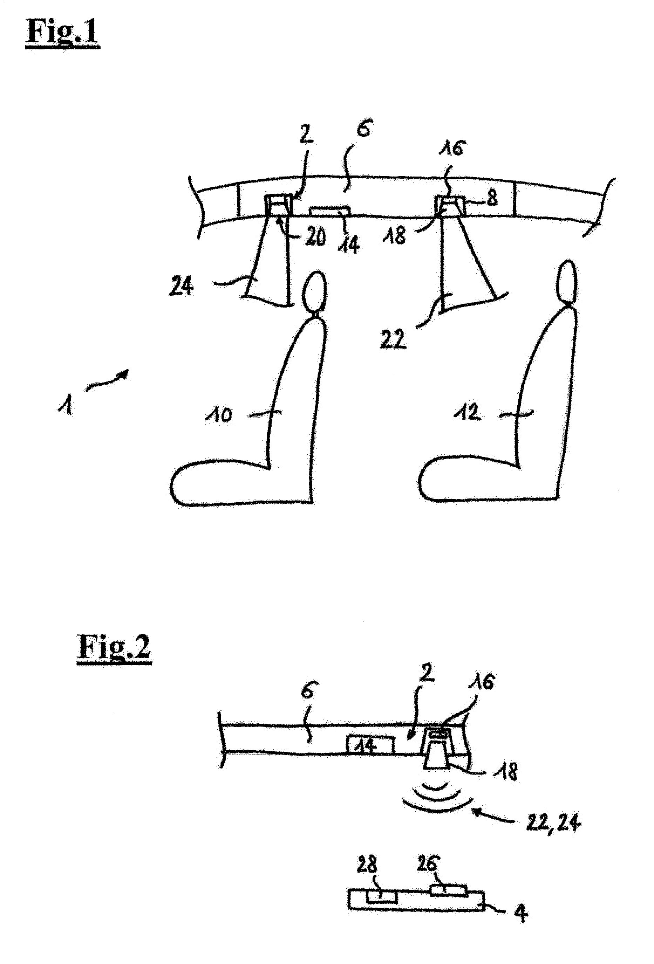

- la figure 1 est une représentation schématique d'un habitacle de véhicule automobile vu de côté, dans lequel le pavillon est équipé de dispositifs selon l'invention pour la transmission de données par application du Li-fi, ici par deux faisceaux ciblés l'un vers un passager avant et l'autre vers un passager arrière;

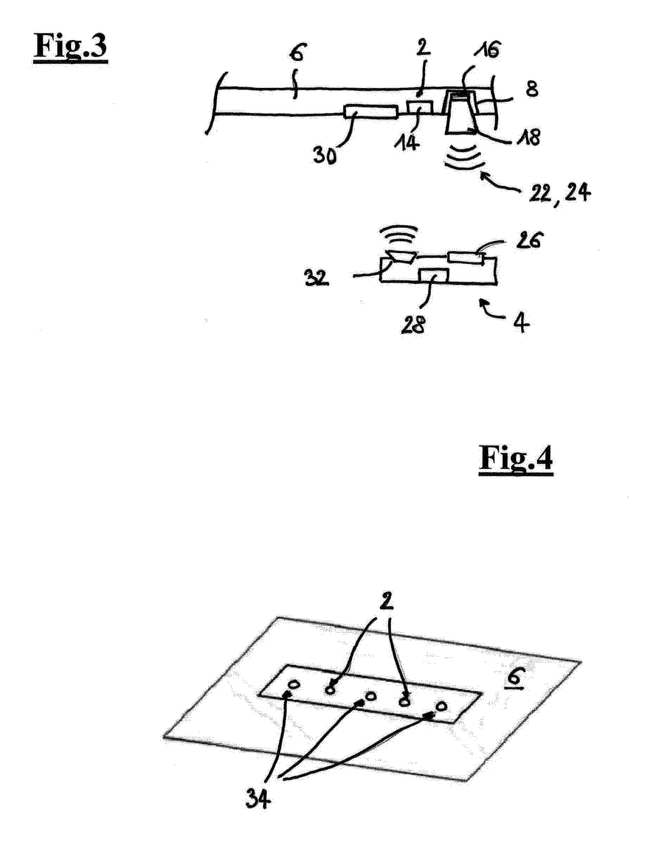

- les figures 2 et 3 sont des schémas de principe des communication entre le pavillon du véhicule illustré sur la figure 1 et un équipement multimédia, la figure 2 illustrant une transmission de données à sens unique du pavillon vers l'équipement multimédia tandis que la figure 3 illustre un échange de données entre le pavillon et l'équipement multimédia ; et
- la figure 4 est une représentation en perspective d'un pavillon et d'une série de sources lumineuses secondaires dont une est remplacée par un dispositif de transmission de données selon l'invention.

Un dispositif de communication selon l'invention équipe l'habitacle intérieur d'un véhicule automobile 1 et il est apte à communiquer, par l'intermédiaire de moyens de transmission et/ou d'acquisition de données 2 avec un équipement multimédia 4 embarqué par un utilisateur du véhicule. Ici, tel que cela est particulièrement visible sur la figure 1, le dispositif est monté dans un pavillon de toit 6 pour profiter du dégagement entre le pavillon et les places assises arrière comme avant, favorable à la bonne communication des données entre le dispositif et l'équipement multimédia.

L'élément de structure formant zone d'accueil des moyens de transmission et/ou d'acquisition de données, ici le pavillon, comporte des cavités 8 creusées dans la structure pour recevoir ces moyens. On a représenté sur la figure 1 deux moyens de transmission et/ou d'acquisition de données, parmi lesquels des premiers et des deuxièmes moyens de transmission sont agencés pour être orientés, les uns vers les places avant 10 du véhicule et les autres vers les places arrières 12, mais on comprendra qu'il peut être intéressant de prévoir des moyens associés à chacun des sièges du véhicule.

Dans un premier mode de réalisation, illustré notamment sur la figure 2, le dispositif comporte des moyens de transmission de données. Ceux-ci comportent des moyens de commande 14, adaptés à traduire une donnée numérique en un signal optique modulé à haute fréquence, et des premiers moyens d'émission de signal optique, qui comportent notamment une source lumineuse 16 commandée pour l'émission dudit signal optique et un élément optique de collimation 18.

A titre d'exemple, on réalise la modulation de l'intensité de la source lumineuse en commandant l'intensité de la source de façon variable à très haute fréquence.

La source lumineuse est une diode électroluminescente adaptée à émettre dans le proche infrarouge. Elle est montée sur une plaque de circuits imprimés, ici non représentée, qui permet la transmission des instructions provenant des moyens de commande. La source lumineuse 16 est disposée en regard de l'élément optique de collimation 18, qui s'étend dans l'axe d'émission de la source lumineuse en présentant une forme de révolution sensiblement conique. Ainsi, on concentre les rayons lumineux émis dans un cône de diffusion ciblé sur l'un des sièges du véhicule.

L'élément optique de collimation comporte d'une part une face d'entrée tournée vers la source lumineuse de manière à ce que les rayons lumineux émis par ladite source pénètrent par réfraction dans ledit élément optique, et d'autre part une face de sortie 20 tournée vers l'habitacle du véhicule de manière à ce que les rayons lumineux guidés à l'intérieur de l'élément optique sortent de celui-ci par réfraction pour être diffusés dans l'habitacle. La face de sortie présente une surface irrégulière pour l'éclatement des rayons lumineux en sortie de l'élément optique.

Les éléments optiques de collimation sont avantageusement montés dans l'élément de structure avec au moins une liberté de rotation, de sorte que l'utilisateur puisse l'orienter selon ses souhaits pour une qualité optimale de la transmission de données. Tel qu'illustré sur la figure 1, on obtient ainsi facilement une configuration telle qu'au moins un premier signal optique 22, comportant un faisceau d'informations codées, est dirigé vers les passagers arrières et qu'au moins un deuxième signal optique 24, comportant un autre faisceau d'informations codées, est dirigé vers le passager avant et/ou le conducteur.

Afin de réaliser la communication de données entre le dispositif 2 et l'équipement multimédia 4, celui-ci comporte une photodiode 26 et un module de commande 28. La photodiode est apte à détecter des variations d'intensité des ondes optiques émises par un des dispositifs de transmission et/ou d'acquisition. Elle fonctionne par ailleurs comme un module de traitement du signal pour transformer les données de variations d'intensités des ondes optiques en un signal numérique qu'elle transmet au module de commande.

Le module de commande génère alors une instruction de commande ou une information exploitable par l'équipement multimédia.

On vient de décrire un mode de réalisation dans lequel les données ne sont échangées que dans un sens, c'est à dire qu'elles sont poussées vers l'équipement multimédia. Il peut être souhaitable qu'un échange d'informations puisse avoir lieu et que l'équipement multimédia puisse transmettre des données. Dans ce contexte, dans un deuxième mode de réalisation illustré sur la figure 3, le dispositif est un dispositif de transmission et de réception de données, différent du dispositif du premier mode de réalisation en ce qu'il comporte en outre des moyens d'acquisition 30 d'un signal optique formé par un rayon lumineux modulé à haute fréquence ainsi que des moyens de commande adaptés à traduire les variations d'intensité d'une onde optique en une donnée numérique.

Dans le cas présent, les moyens de commande 14 sont communs aux moyens d'acquisition et aux moyens d'émission de signal optique, c'est à dire que les moyens de commande sont aptes d'une part à transformer une instruction de commande sous forme de signal numérique en un signal optique réalisé par une modulation à haute fréquence de l'intensité d'émission d'une diode associée, lorsque le dispositif fonctionne en transmission de données, et d'autre part à participer à la traduction d'un signal optique modulé à haute fréquence en une donnée numérique.

Les moyens d'acquisition sont formés par une photodiode apte à détecter des variations d'intensité des ondes optiques émises par l'équipement multimédia qui lui aussi diffère de l'équipement multimédia du premier mode de réalisation en la présence d'une diode électroluminescente 32 d'émission dans le proche infrarouge.

La diode de l'équipement multimédia est adaptée à émettre en direction du dispositif de transmission et/ou d'acquisition un faisceau de rayons lumineux dont l'intensité est modulée à haute fréquence par le module de commande en fonction de l'information qu'il souhaite communiquer vers le dispositif de transmission et/ou d'acquisition.

Dans les deux modes de réalisation décrits ci-dessus, et dans le cadre de leur application à un pavillon de toit, il sera intéressant, tel qu'illustré sur la figure 4, de disposer les cavités de réception des moyens de transmission et/ou d'acquisition des données dans l'alignement formé par des sources lumineuses secondaire 34, qui équipent par ailleurs le pavillon. Les sources lumineuses secondaires consistent en des diodes émettrices de lumière blanche disposées en regard d'élément optique de collimation pour permettre lorsqu'elles sont allumées, l'éclairage ciblé sur une place du véhicule, du type lumière de lecture, ou liseuse, par exemple. Ces sources lumineuses secondaires comportent le même type d'élément optique de collimation, de sorte qu'on pourra avantageusement à la conception du véhicule prévoir des cavités similaires quel que soit l'utilisation finale qui en est faite. Au montage ou en après-vente, on remplacera la diode émettrice de lumière blanche par une diode émettrice de lumière proche infrarouge pour former un dispositif de transmission de données, en paramétrant les moyens de commande pour piloter ce dispositif.

On pourra même prévoir d'équiper directement le véhicule avec des sources lumineuses, disposées dans les cavités en regard de l'élément optique de collimation, qui comportent une diode électroluminescente à deux puces, l'une apte à émettre de la lumière blanche visible et l'autre adaptée à émettre de la lumière proche infrarouge. Selon une requête de l'utilisateur, les moyens de commande associés génèrent alors une instruction pour activer l'une ou l'autre des puces de la diode électroluminescente.

La description qui précède explique clairement comment l'invention permet d'atteindre les objectifs qu'elle s'est fixés et notamment de proposer un dispositif adapté à l'échange de données avec un équipement multimédia autonome rapporté par l'utilisateur. La communication sans fil basée sur la modulation à haute fréquence d'une onde optique est ici avantageusement appliquée à l'intérieur du véhicule, et cela permet pour un usage interne sécurisé pour l'utilisateur occupant ledit véhicule.

Bien entendu, diverses modifications peuvent être apportées par l'homme du métier aux caractéristiques du dispositif de communication, et de l'équipement multimédia associé, qui viennent d'être décrites à titre d'exemples non limitatifs, dès lors que l'on permet une application du Li-fi à l'intérieur de l'habitacle du véhicule automobile. Les modes de réalisation qui ont été décrits en détails ci-dessus ne sont pas limitatifs de l'invention. En tout état de cause, l'invention ne saurait se limiter aux modes de réalisation spécifiquement décrits dans ce document, et s'étend en particulier à tous moyens équivalents et à toute combinaison techniquement opérante de ces moyens.

Ainsi, d'autres variantes non représentées sont prévues et certaines sont décrites ci-dessous, sans toutefois que cette liste soit pour autant exhaustive :
- le ou les dispositifs de transmission et/ou d'acquisition de données sont logés dans un élément de structure différent du pavillon, et par exemple dans la planche de bord pour la diffusion des données vers les places avant, dans les appuis têtes des sièges avant pour la diffusion des données vers les places arrière ou encore dans les portières du véhicule ;
- le nombre ou la disposition des dispositifs peut varier, et par exemple les dispositifs peuvent ne pas être alignés au centre de l'élément de structure ;
- un réflecteur est intégré dans l'élément optique de collimation pour réfléchir les rayons issus de la source lumineuse et les orienter vers l'habitacle dans la direction choisie ;
- les informations peuvent être modulées en intensité pour former une onde porteuse, qui est elle-même modulée en phase ou en fréquence pour coder les informations du faisceau d'informations ;
- les diodes peuvent émettre dans une longueur d'onde différente du proche infrarouge.

## Revendications

1. Dispositif de communication destiné à équiper l'habitacle d'un véhicule automobile pour la transmission de données vers au moins un équipement multimédia disposé dans cet habitacle, **caractérisé en ce qu'**il comporte au moins des premiers moyens de transmissions de données comportant des premiers moyens de commande (14) adaptés à traduire une donnée numérique en un premier signal optique (22) modulé à haute fréquence et des premiers moyens d'émission (16, 18) dudit premier signal optique, les premiers moyens d'émission étant agencés de manière à émettre ledit premier signal dans une première direction privilégiée d'émission prédéterminée.

2. Dispositif selon la revendication 1, **caractérisé en ce que** lesdits premiers moyens d'émission comportent une source lumineuse (16) disposée en regard d'un élément optique de collimation (18).

3. Dispositif selon la revendication précédente, **caractérisé en ce que** ledit élément optique de collimation (18) comporte d'une part une face d'entrée tournée vers la source lumineuse (16) de manière à ce que les rayons lumineux émis par ladite source pénètrent par réfraction dans ledit élément optique, et d'autre part une face de sortie (20) tournée vers l'habitacle du véhicule de manière à ce que les rayons lumineux guidés à l'intérieur de l'élément optique sortent de celui-ci par réfraction pour être dirigés dans l'habitacle selon la première direction.

4. Dispositif selon l'une des revendications 2 à 3, **caractérisé en ce que** ladite source lumineuse (16) est une diode électroluminescente.

5. Dispositif selon la revendication précédente, **caractérisé en ce que** ladite diode est une diode d'émission dans le proche infrarouge.

6. Dispositif selon la revendication 4, **caractérisé en ce que** ladite diode est une diode d'émission dans le domaine visible.

7. Dispositif selon l'une des revendications précédentes, **caractérisé en ce qu'**il comporte en outre des moyens d'acquisition (30) d'un signal optique formé par un rayon lumineux modulé à haute fréquence et **en ce qu'**il comporte des moyens de commande (14) adaptés à traduire un signal optique modulé à haute fréquence en une donnée numérique.

8. Dispositif selon la revendication 7, **caractérisé en ce que** les moyens d'acquisition (30) sont disposés à proximité des moyens d'émission dudit dispositif.

9. Dispositif selon l'une des revendications précédentes, **caractérisé en ce que** les premiers moyens de transmission sont agencés de manière à associer le premier signal optique (22) à un seul équipement multimédia et à établir avec cet équipement multimédia une communication sans fil pour un usage interne et sécurisé pour l'utilisateur occupant ledit véhicule et utilisant cet équipement multimédia (4).

10. Dispositif selon l'une des revendications précédentes, **caractérisé en ce que** le premier signal optique (22) comporte un faisceau d'informations codées par modulation de l'intensité lumineuse des rayons lumineux émis par les premiers moyens de transmission de données.

11. Dispositif selon l'une des revendications précédentes, **caractérisé en ce qu'**il comporte des deuxièmes moyens de transmissions de données comportant des deuxièmes moyens de commande (14) adaptés à traduire une donnée numérique en un deuxième signal optique (24) modulé à haute fréquence et des deuxièmes moyens d'émission dudit deuxième signal optique, les deuxièmes moyens d'émission étant agencés de manière à émettre ledit deuxième signal dans une deuxième direction privilégiée d'émission prédéterminée distincte de la première direction.

12. Dispositif selon la revendication 11, **caractérisé en ce que** les deuxièmes moyens de transmission sont agencés de manière à associer le deuxième signal optique à un autre équipement multimédia que celui associé aux premiers moyens de transmission et à établir avec cet équipement multimédia une communication sans fil pour un usage interne et sécurisé pour l'utilisateur occupant ledit véhicule et utilisant cet équipement multimédia (4).

13. Dispositif selon l'une des revendications précédentes, **caractérisé en ce que** lesdits premiers moyens d'émission comportent une source lumineuse formée par une diode émettrice de lumière proche infrarouge, et **en ce que** le dispositif comporte en outre des sources lumineuses secondaires (32) formées par une diode émettrice de lumière blanche.

14. Dispositif selon la revendication précédente, **caractérisé en ce que** la diode émettrice de lumière proche infrarouge des premiers moyens d'émission et une source lumineuse secondaire (32) sont formées par une diode électroluminescente à deux puces, dont l'une correspond au mode de fonctionnement d'émission de lumière blanche tandis que l'autre correspond au mode de fonctionnement d'émission de lumière proche infrarouge, et **caractérisé en ce qu'**il comporte des moyens de commande (14) aptes à commander, notamment alternativement, l'un et/ou l'autre des modes de fonctionnement de la diode à deux puces.

15. Equipement multimédia (4) adapté à être utilisé dans un véhicule automobile, **caractérisé en ce qu'**il comporte des moyens spécifiques à la réception d'ondes optiques émises par un dispositif de communication (2) selon l'une des revendications précédentes et à la détection des variations d'intensité desdites ondes, et **en ce qu'**il comporte en outre un module de traitement du signal adapté à recevoir les données de la part desdits moyens spécifiques à la réception pour transformer ces données en un signal numérique exploitable par l'équipement multimédia.

16. Equipement multimédia selon la revendication 15, **caractérisé en ce que** lesdits moyens spécifiques consistent en une photodiode (26).

17. Equipement selon l'une des revendications 15 ou 16, **caractérisé en ce qu'**il comporte en outre une source lumineuse adaptée à émettre en direction dudit dispositif embarqué du véhicule un faisceau de rayons lumineux dont l'intensité est modulée.

18. Equipement selon la revendication 17, **caractérisé en ce que** ladite source lumineuse est une diode électroluminescente (32) d'émission dans le proche infrarouge.

19. Véhicule automobile, **caractérisé en ce qu'**il comporte un dispositif de communication selon l'une des revendications 1 à 14.
